# EUROPEAN PATENT APPLICATION

(11) **EP 2 620 870 A1**
(43) Date of publication of application: **31.07.2013**
(21) Application number: 12198695.4
(22) Date of filing: 20.12.2012
(51) Int. Cl.: G06F 9/44, G06F 3/0488

(54) **Method and apparatus for providing a dynamic display division in a mobile terminal**

(30) Priority: 22.12.2011 KR 20110140295
(71) Applicant: Samsung Electronics Co., Ltd., Suwon-si, Gyeonggi-do, 443-742 (KR)
(72) Inventor: Sim, Simon, Gyeonggi-do (KR)
(74) Representative: Nederlandsch Octrooibureau

(57) **Abstract**

A method for providing a dynamic screen division in a mobile terminal screen is provided where a division boundary line of an arbitrary shape for screen division defined by a user is detected, and at least one application program to be displayed together is selected so that one or more application programs are allocated to independent layers, respectively and the respective layers are merged using the division boundary line defined by the user as a reference for a display together.

## Description

### BACKGROUND OF THE INVENTION

### 1. Field of the Invention

The present invention relates to a method and an apparatus for dividing a display screen in a mobile terminal.

### 2. Description of the Related Art

In the case where a user simultaneously displays a plurality of application programs on a mobile terminal display, the display screen is divided vertically or horizontally by a user interface so that the application program is displayed on the respective vertically or horizontally divided region.

In the case where each application program is executed via the vertically or horizontally divided display screen, an important portion of the relevant program may not be displayed depending on the shape or size of the adjacent divided screen. In this case, a user may feel inconvenience, and thus there is a need to develop an improved user interface that would eliminate this inconvenience.

### SUMMARY OF THE INVENTION

An object of the present invention is to address at least the above-mentioned problems and/or disadvantages and to provide at least the advantages described below, by providing a method and an apparatus for enabling a dynamic display division on a mobile terminal display.

Another object of the present invention is to provide a method and an apparatus for allowing a user to arbitrarily divide a display screen of a mobile terminal for displaying a plurality of application programs.

Still another object of the present invention is to provide a method and an apparatus for allowing a user to arbitrarily divide a region on which an executed application program is displayed when executing a plurality of application programs in a mobile terminal.

In accordance with a aspect of the present invention at least one of these objects is achieved by, a method for dynamic screen division for a mobile terminal having a touch screen, the method comprising detecting a division boundary line on the touch screen; detecting a selection of at least one application program to be displayed together; assigning one or more application programs to respective layer; and merging respective layers using the division boundary line as a reference for a display together.

In accordance with another aspect of the present invention, at least one of these objects is achieved by an apparatus performing a dynamic screen division for a mobile terminal, the apparatus comprising an input unit provided with a touch screen arranged to detect a division boundary line on the touch screen and a selection of at least one application program to be displayed together; a controller arranged to allocate one or more application programs to independent layers, respectively, and to merge respective allocated layers using the division boundary line as a reference; and a display arranged to output a merged layer for a display together.

In accordance with still another aspect of the present invention, at least one of these objects is achieved by a mobile communication system for performing dynamic screen division comprising a network server ; and a mobile terminal arranged to detecting a division boundary line and a selection of at least one application program to be displayed together, to allocate one or more application programs to independent layers, respectively, to merge respective allocated layers using the division boundary line as a reference for a display together, to output a merged layer, and to transmit a set value corresponding to the division boundary line to the network server.

Further advantageous embodiments of the invention are defined in the dependent claims.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:
FIG. 1 is a view illustrating an example of dynamic division of an application program according to an exemplary embodiment of the present invention;
FIG. 2 is a view illustrating allocation relation between an application program and a layer according to an exemplary embodiment of the present invention;
FIG. 3 is a view illustrating a division boundary line setting process according to an exemplary embodiment of the present invention;
FIG. 4 is a flowchart illustrating a division boundary line setting process according to an exemplary embodiment of the present invention;
FIG. 5 is a view illustrating a division boundary line loading process according to an exemplary embodiment of the present invention;
FIG. 6 is a flowchart illustrating a division boundary line loading process according to an exemplary embodiment of the present invention;
FIG. 7 is a block diagram illustrating a mobile terminal according to an exemplary embodiment of the present invention; and
FIG. 8 is a block diagram illustrating a network server according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

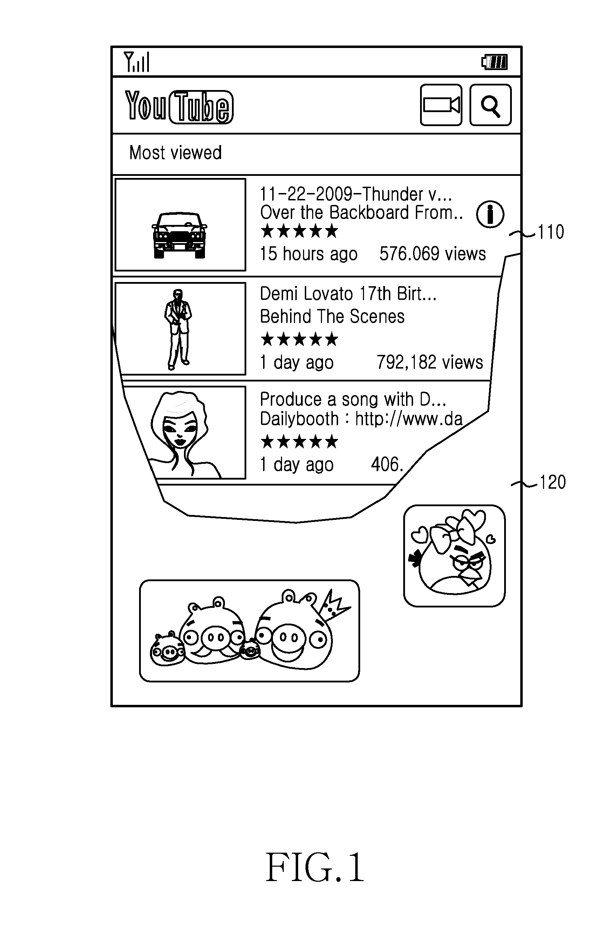

FIG. 1 is a view illustrating an example of dynamic division of an application program according to an exemplary embodiment of the present invention.

Referring to FIG. 1, according to the teachings of the present invention at least two different application programs are dividably and displayed. A boundary line between an application program 110 and an application program 120 denotes a division boundary line between the two application programs 110 and 120. The division boundary line may be arbitrarily set.

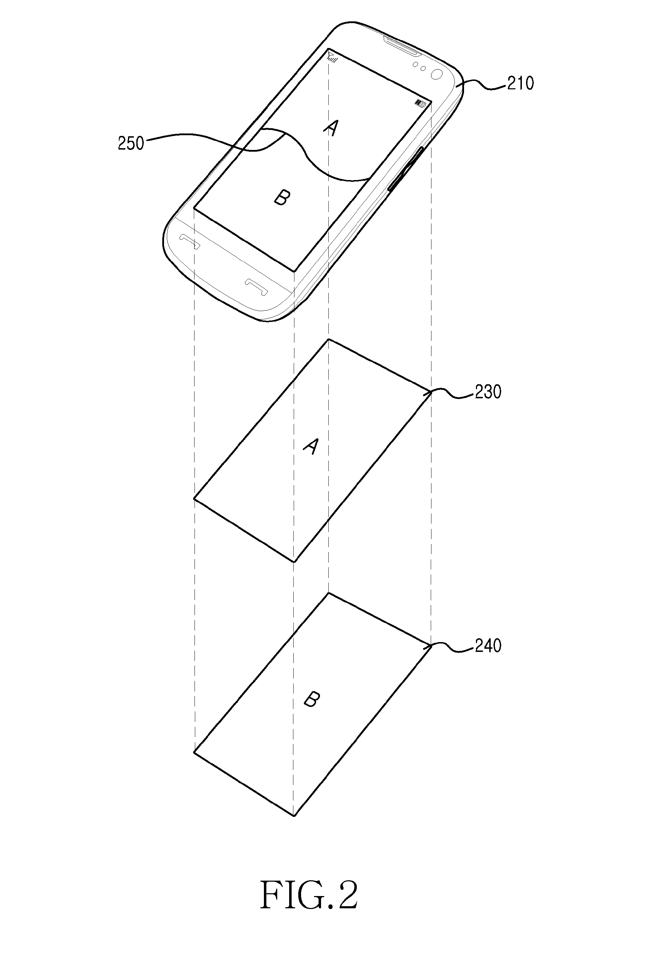

The application programs 110 and 120 are independent layers, respectively. A mobile terminal merges the respective independent layers, and displays the application programs 110 and 120 according to the division boundary line. A detailed explanation of the embodiment shown in FIG. 1 will be explained hereinafter with reference to FIGs. 2-6.

FIG. 2 is a view illustrating allocation relation between an application program and a layer according to an exemplary embodiment of the present invention.

Referring to FIG. 2, an application program A 230 and an application program B 240 are allocated to independent layers, respectively. The layer 230 and 240 represent logical layers in which application programs are running respectively.

In case of displaying the application program A 230 and the application program B 240 together, a mobile terminal displays the application program A 230 and the application program B 240 on a display screen 210 along a set division boundary line 250, which may be arbitrarily set by a user. The shape of boundary is set according to a user's preference.

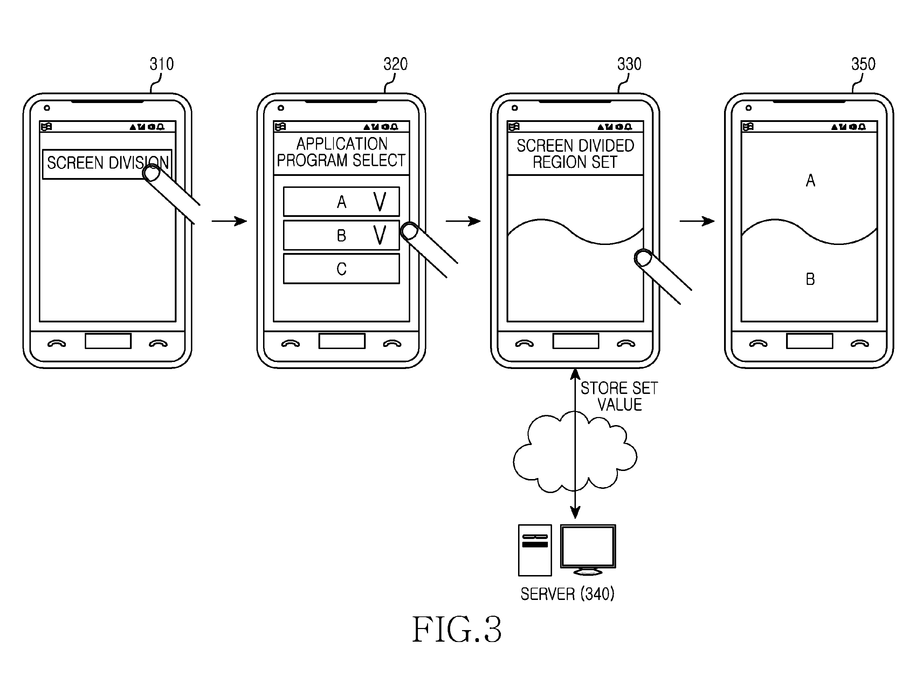

FIG. 3 is a view illustrating a division boundary line setting process according to an exemplary embodiment of the present invention.

Referring to FIG. 3, in operation, a user selects a screen divide function of a mobile terminal (step 310), and then selects an application program to be driven during screen division (step 320). For illustrative purposes, the present invention is described using a case where an application program A and an application program B have been selected, as indicated by V. The application program A and the application program B are allocated to independent layers, respectively.

The user performs a screen divide region setting process (step 330). According to an exemplary embodiment of the present invention, the user draws a curve-shaped division boundary line on a screen, and the mobile terminal merges application programs to display using the division boundary line as a reference, and displays the same (step 350). According to an exemplary embodiment of the present invention, the user may draw not only the curve-shaped division boundary line but also a division boundary line of any shape desired by the user.

According to an exemplary embodiment of the present invention, the mobile terminal merges and displays respective layers suitable for a set divided screen region based on a set region defined by the user.

As shown, the application program A is displayed on the upper portion above the division boundary line, and the application program B is displayed on the lower portion below the division boundary line.

However, the position of the application program on the divided display screen may change depending on the user's selection. For example, in step 320, the user may designate the position of an application program on the divided display screen while selecting the desired program so that the selected program can be displayed at the desired location.

In the case where a divided screen region set value store function is selected, the mobile terminal may store a divided screen region set value set in a server 340, that is, a server 340 on the network. This store function may be selected or the mobile terminal may execute the store function based on a predetermined set value.

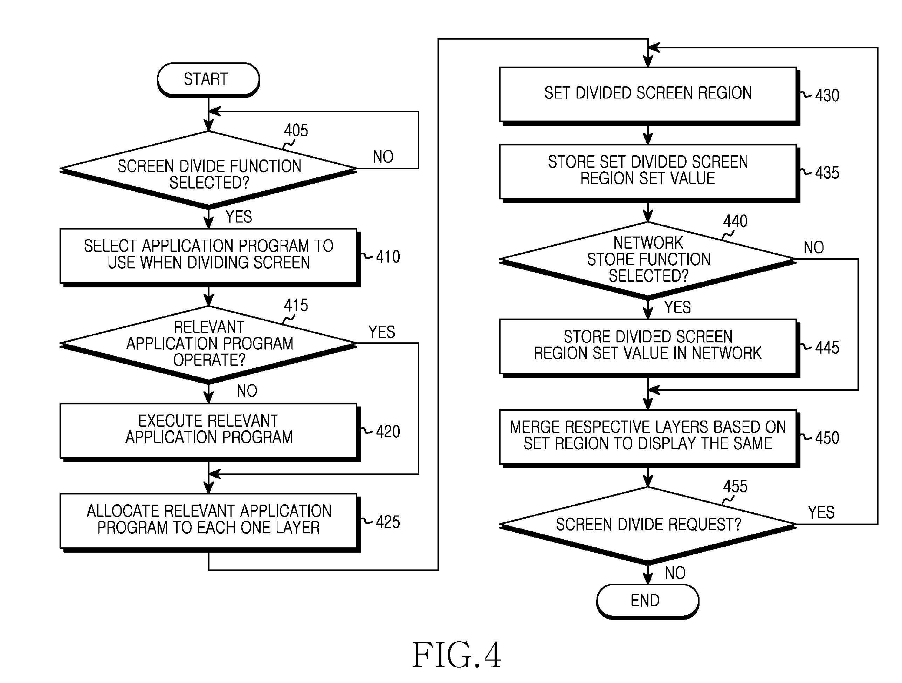

FIG. 4 is a flowchart illustrating a division boundary line setting process according to an exemplary embodiment of the present invention.

Referring to FIG. 4, a user selects a screen divide function in a mobile terminal (step 405). After that, the user selects an application program to use during screen division (step 410).

In the case where a relevant application program, that is, an application program which the user selects for a dual displayis not operating currently (step 415), the relevant application program is executed (step 420). Thereafter, the mobile terminal allocates application programs selected by the user to layers, respectively (step 425).

Then, the user sets a screen region to divide to the mobile terminal (step 430), and the mobile terminal stores the set divided screen region set value (step 435). That is, the user selectively draws a division boundary line on the divided region setting screen, and the mobile terminal recognizes the boundary line drawn on the screen and stores the value defining the division boundary line, (or a divided screen region set value).

Here, if a divided screen region set value store function is selected (step 440), the mobile terminal stores the divided screen region set value in a network, that is, a server on the network (step 445). Thereafter, the divided screen region set value store function may be selected by the user, or the mobile terminal may execute the store function based on the divided screen region set value. That is, the store function of the mobile terminal stores the divided screen region set value. The mobile terminal merges and displays respective layers according to the divided boundary line based on a set region (step 450). Meanwhile, when receiving a screen divide request from the user (step 455), the mobile terminal restarts the divided screen region setting step (step 430).

The method described above in relation with FIG. 4 under of the present invention may be provided as one or more instructions in one or more software modules stored in the respective apparatus.

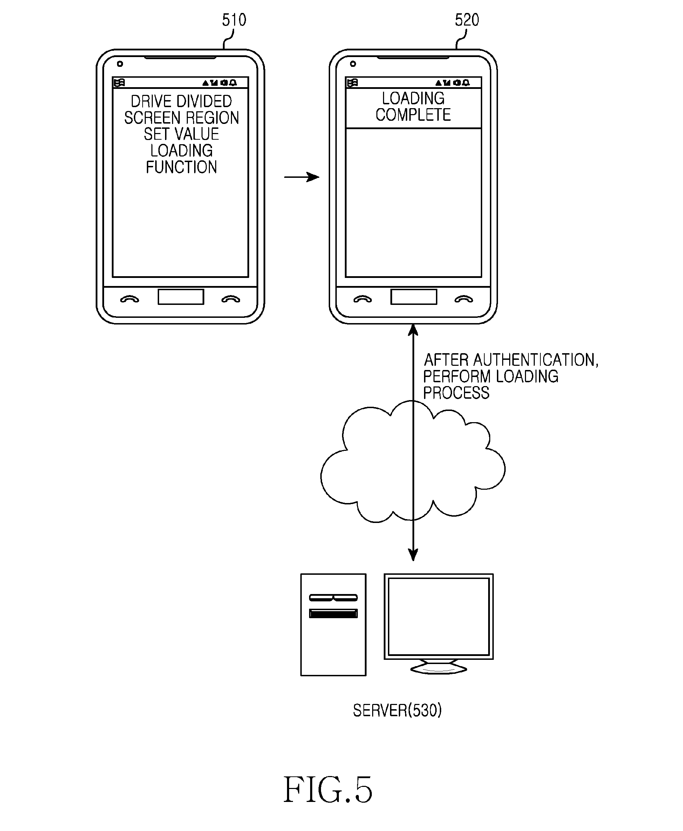

FIG. 5 is a view illustrating a division boundary line loading process according to an exemplary embodiment of the present invention.

Referring to FIG. 5, when a divided screen region set value load function of the mobile terminal is driven (step 510), the mobile terminal performs authentication of a user, and when the authentication succeeds (step 530), the mobile terminal completes the loading process (step 520). The purpose of storing the divided screen region set value in a remote server is to prevent the loss of the divided screen region set value.

This case may correspond to a case where the divided screen region set value has been damaged in the mobile terminal and the user loads the divided screen region set value stored in a network. Alternatively, this case may be a case of loading the divided screen region set value stored in the network in the case where the user or the mobile terminal requires the divided screen region set value stored in the network. Further, the authentication process may be also used for a case of storing the divided screen region set value of FIG. 3.

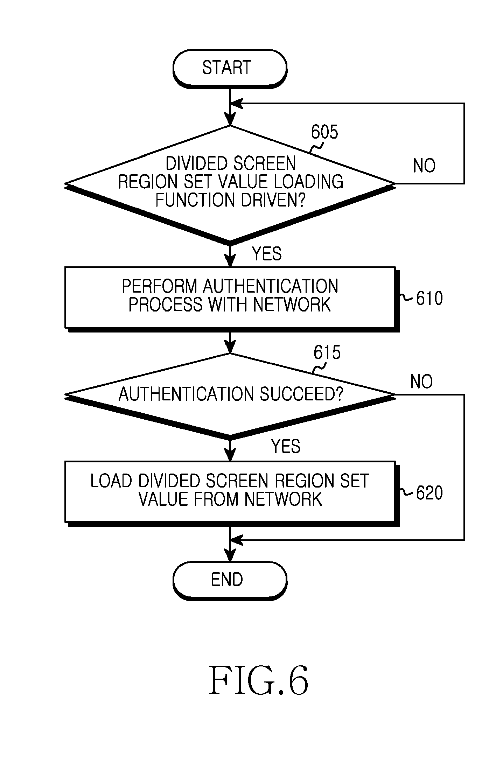

FIG. 6 is a flowchart illustrating a division boundary line loading process according to an exemplary embodiment of the present invention.

Referring to FIG. 6, when a divided screen region set value load function of the mobile terminal is driven (step 605), the mobile terminal performs authentication for a user with a network (step 610).

After that, when the authentication succeeds (step 615), the mobile terminal loads the divided screen region set value (step 620). That is the mobile terminal downloads the divided screen region set value from the network and the mobile terminal uses the divided screen region set value to display at least one application on a screen region together.

The method described above in relation with FIG. 6 under of the present invention may be provided as one or more instructions in one or more software modules stored in the respective apparatus.

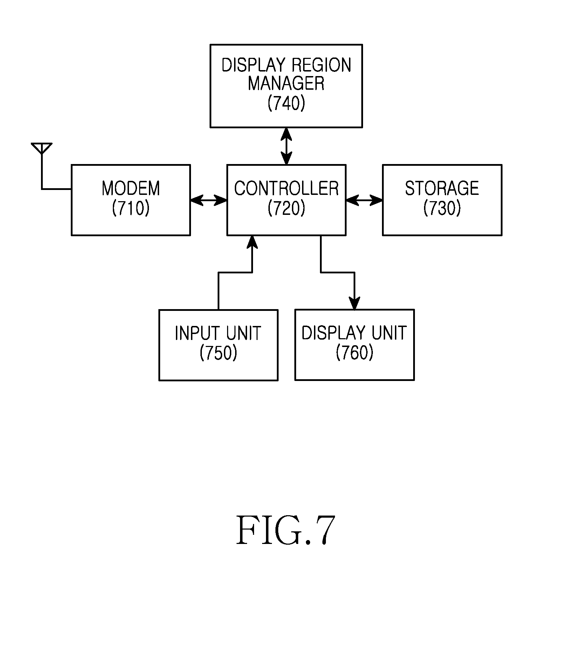

FIG. 7 is a block diagram illustrating a mobile terminal according to an exemplary embodiment of the present invention.

Referring to FIG. 7, the mobile terminal includes a modem 710, a controller 720, a storage 730, a display region manager 740, an input unit 750, and a display unit 760.

The modem 710 serves as a module for communicating with other devices, and includes a Radio Frequency (RF) processor and a baseband processor. The RF processor converts a signal received via an antenna into a baseband signal to provide the same to the baseband processor, and converts a baseband signal from the baseband processor to an RF signal so that it can be actually transmitted on air to transmit the same via the antenna.

The controller 720 controls an overall operation of the mobile terminal, and more particularly, includes or controls the display region manager 740 according to the present invention.

The storage 730 stores a program for controlling an overall operation of the mobile terminal and temporary data generated during execution of a program. Particularly, according to the present invention, the storage 730 stores layer information and a divided screen region set value allocated for an application program.

The input unit 750, which can be provided with a touch screen, provides a user's touch input to the controller 720, and the display unit 760 displays an output of the controller 720.

According to the present invention, the input unit 750 receives a division boundary line input by a user to provide the same to the controller 720, and the display unit 750 outputs a screen corresponding to a merged layer provided by the controller 720.

In the case where a user selects a screen divide function and selects an application program to use during the screen division mode, when the application program to use during screen division is not being operated, the display region manager 740 executes the relevant application program.

In addition, the display region manager 740 allocates application programs selected by the user to layers, respectively.

The user sets a screen region to divide via the input unit 750, and the display region manager 740 stores a set divided screen region set value in the storage 730. This process denotes a process where a user draws a division boundary line on a divided region setting screen, and the display region manager 740 recognizes and stores a divided screen region set value set along the division boundary line.

In the case where the set divided screen region store function is selected, the display region manager 740 stores the set divided screen region set value in a network, that is, a server on the network. The set divided screen region store function may be subsequently selected by the user, or the display region manager 740 may execute the store function based on a predetermined set value. In this case, when needed, an authentication process may be performed. That is, the store function of the mobile terminal stores the divided screen region set value.

The display region manager 740 merges respective layers according to the division boundary line based on the set region to display the same on the display unit 760. The display region manager 740 displays the at least one application which are running according to the division boundary line together. That is, the display region manager 740 merges the respective layers and the respective layers are displayed together. The displayed shape of the respective layer is determined according to the division boundary line.

When receiving a screen division change request from a user, the display region manager 740 performs the divided screen region setting in step 430 of FIG. 4.

When a divided screen region set value load function is driven, the display region manager 740 of the mobile terminal performs a divided screen region set value load function. The display region manager 740 may perform an authentication process when performing the loading process.

The mobile terminal may be an electronic device such as, for example, a laptop, a smart phone, a net book, a mobile internet device, an ultra mobile PC, a tablet personal computer, a mobile telecommunication terminal, PDA having a camera and the like herein, just to name some of the possibilities.

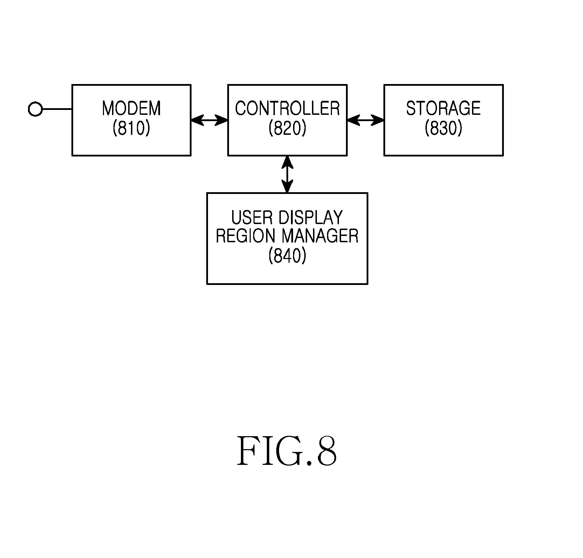

FIG. 8 is a block diagram illustrating a network server according to an exemplary embodiment of the present invention.

Referring to FIG. 8, the network server includes a modem 810, a controller 820, a storage 830, and a user display region manager 840.

The modem 810 serves as a module for communicating with other devices, and includes a wired processor and a baseband processor. The wired processor converts a signal received via a wired path into a baseband signal to provide the same to the baseband processor, and converts a baseband signal from the baseband processor into a wired signal so that it can be transmitted on an actual wired path to transmit the same via the wired path.

The controller 820 controls an overall operation of the network server, and particularly, includes or controls the user display region manager 840 according to the present invention.

The storage 830 stores a program for controlling an overall operation of the network server and temporary data generated during execution of a program. Particularly, according to the present invention, the storage 830 stores layer information and a divided screen region set value allocated for an application program for a user transmitted by a mobile terminal.

The user display region manager 840 stores the divided screen region set value transmitted by the mobile terminal, and transmits the relevant set value to the mobile terminal when the mobile terminal requests the divided screen region set value. The purpose of storing the divided screen region set value in a remote server is to prevent the loss of the divided screen region set value.

During this process, the user display region manager 840 performs an authentication process on the mobile terminal, and accepts a request of the mobile terminal only if the authentication succeeds to store the divided screen region set value transmitted by the mobile terminal, or transmit the relevant set value to the mobile terminal when the mobile terminal requests the divided screen region set value.

The present invention has an advantage of preventing a user's inconvenience that may occur when a display screen displaying an application program is fixed which prevents from multiple programs from being displayed.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although the invention has been shown and described with reference to certain exemplary embodiments thereof, it will be understood by those skilled in the art that various changes in form and details may be made therein without departing from the scope of the invention as defined by the appended claims and their equivalents. Therefore, the scope of the present invention should not be limited to the above-described embodiments but should be determined by not only the appended claims but also the equivalents thereof.

## Claims

1. A method for providing a dynamic screen division for a mobile terminal having a touch screen, the method comprising:
detecting a division boundary line on the touch screen;
detecting a selection of at least one application program to be displayed together;
assigning one or more application programs to respective layer; and
merging respective layers using the division boundary line as a reference for a display together.

2. The method of claim 1, further comprising transmitting a set value corresponding to the division boundary line to a network, wherein the set value corresponding to the division boundary line represents a division boundary line value on the touch screen.

3. The method of claim 2, further comprising, when transmitting the set value of the division boundary line to the network, performing an authentication process.

4. The method of claim 1, further comprising:
loading a set value of the division boundary line from a network.

5. The method of claim 4, further comprising, when loading the set value of the division boundary line from the network, performing an authentication process.

6. The method of claim 1, further comprising, when the one or more application programs are not open, executing an application program not executed.

7. An apparatus for performing a dynamic screen division for a mobile terminal, the apparatus comprising:
an input unit provided with a touch screen arranged to detect a division boundary line on the touch screen and a selection of at least one application program to be displayed together;
a controller arranged to allocate one or more application programs to independent layers, respectively, and to merge respective allocated layers using the division boundary line as a reference; and
a display arranged to output a merged layer for a display together.

8. The apparatus of claim 7, wherein the controller is further arranged to transmit a set value corresponding to the division boundary line to a network, wherein the set value corresponding to the division boundary line represents a division boundary line value on the touch screen.

9. The apparatus of claim 8, wherein the controller is further arranged to perform an authentication process, when transmitting the set value of the division boundary line to the network,

10. The apparatus of claim 7, wherein the controller is further arranged to load a set value corresponding to the division boundary line from a network.

11. The apparatus of claim 10, wherein the controller is further arranged to perform an authentication process, when loading the set value of the division boundary line from the network.

12. The apparatus of claim 7, wherein the controller is further arranged to execute an application program not executed, when the one or more application programs are not open.

13. A mobile communication system for providing a dynamic screen division, comprising:
a network server ; and
a mobile terminal arranged to detecting a division boundary line and a selection of at least one application program to be displayed together, to allocate one or more application programs to independent layers, respectively, to merge respective allocated layers using the division boundary line as a reference for a display together, to output a merged layer, and to transmit a set value corresponding to the division boundary line to the network server.

14. The system of claim 13, wherein the mobile terminal is arranged to perform an authentication process, and
wherein the set value corresponding to the division boundary line represents a division boundary line value on the touch screen when transmitting the set value of the division boundary line to the network.

15. The system of claim 13, wherein the mobile terminal is arranged to load the set value of the division boundary line from a network, when performing an authentication process and
wherein the mobile terminal is arranged to execute an application program not executed, when the one or more application programs are not open.
